# EUROPEAN PATENT APPLICATION

(11) **EP 3 816 995 A1**
(43) Date of publication of application: **05.05.2021**
(21) Application number: 19824812.2
(22) Date of filing: 06.05.2019
(51) Int. Cl.: G10L 15/26, G10L 15/16, G10L 21/0216

(54) **METHOD AND DEVICE FOR SPEECH RECOGNITION, COMPUTER DEVICE, AND ELECTRONIC DEVICE**

(30) Priority: 28.06.2018 CN 201810689667
(71) Applicant: TENCENT TECHNOLOGY (SHENZHEN) COMPANY LIMITED, Shenzhen, Guangdong 518057 (CN)
(72) Inventor: GAO, Yi, Shenzhen, Guangdong 518057 (CN); ZHENG, Jimeng, Shenzhen, Guangdong 518057 (CN); YU, Meng, Shenzhen, Guangdong 518057 (CN); LUO, Min, Shenzhen, Guangdong 518057 (CN)
(74) Representative: Eisenführ Speiser
(86) International application number: PCT/CN2019/085625
(87) International publication number: WO 2020/001163

(57) **Abstract**

The present application relates to a method and device for speech recognition, a computer device, and an electronic device. The method comprises: receiving an audio signal captured by a microphone array; performing beamforming processing of the audio signal respectively in multiple different target directions to produce multiple corresponding beamforming signals; performing speech recognition respectively with respect to each beamforming signal to produce speech recognition results of the beamforming signals; and determining a speech recognition result of the audio signal on the basis of the speech recognition results of the beamforming signals. The method obviates the need to take into consideration the direction of a sound source, with beamforming processing performed in the different target directions, at least one of the target directions comes close to the actual direction in which sound is generated; therefore, the beamforming signal in at least one of the target directions is clear when enhanced, thus allowing speech recognition to be performed on the basis of the beamforming signals, and increasing the accuracy of speech recognition.

## Description

### RELATED APPLICATION

This application claims priority to Chinese Patent Application No. 201810689667.5, titled "SPEECH SIGNAL RECOGNITION METHOD AND APPARATUS, COMPUTER DEVICE, AND ELECTRONIC DEVICE" and filed on June 28, 2018, which is incorporated by reference in its entirety.

### FIELD OF THE TECHNOLOGY

This application relates to the field of speech interaction technologies, and in particular, to a speech recognition method and apparatus, a computer device, and an electronic device.

### BACKGROUND OF THE DISCLOSURE

Intelligent speech interaction is a technology of implementing human-machine interaction by using a speech command. An electronic device may be made intelligent by implanting a speech interaction technology into the electronic device. In addition, the intelligent electronic device is currently becoming increasingly popular with users. For example, the Amazon Echo smart speaker has made a huge success in the market.

For the electronic device into which the speech interaction technology is implanted, accurate recognition of a speech command of a user is a basis of implementing the human-machine interaction. However, an environment in which the user uses the electronic device is uncertain. When the user is in a scenario with a relatively large ambient noise, how to reduce an impact of the ambient noise on speech recognition to improve speech recognition accuracy of the electronic device is a problem to be resolved urgently.

In the related art, a method for resolving such a problem generally includes: first collecting audio signals by using all microphones in a microphone array, then determining sound source angles according to the collected audio signals, and performing directional collection on the audio signals according to the sound source angles, thereby reducing interference from unrelated noises. However, this method is subject to precision of the sound source angles. When the sound source angles are incorrectly detected, speech recognition accuracy is reduced consequently.

### SUMMARY

In view of this, embodiments of this application provide a speech recognition method and apparatus, a computer device, and an electronic device, which can resolve the problem of low speech recognition accuracy in the related art.

A speech recognition method is provided, including:
receiving an audio signal collected by a microphone array;
performing beamforming processing on the audio signal in a plurality of different target directions, to obtain a plurality of corresponding beam signals;
performing speech recognition on each of the plurality of beam signals, to obtain speech recognition results of the plurality of beam signals; and
determining a speech recognition result of the audio signal according to the speech recognition results of the plurality of beam signals.

A speech recognition apparatus is provided, including:
an audio signal receiving module, configured to receive an audio signal collected by a microphone array;
a beamformer, configured to perform beamforming processing on the audio signal in a plurality of different target directions, to obtain a plurality of corresponding beam signals;
a speech recognition module, configured to perform speech recognition on each of the plurality of beam signals, to obtain speech recognition results of the plurality of beam signals; and
a processing module, configured to determine a speech recognition result of the audio signal according to the speech recognition results of the plurality of beam signals.

A computer device is provided, including a microphone array, a memory and a processor, the memory storing a computer program, the computer program, when executed by the processor, causing the processor to perform the steps of the foregoing method.

An electronic device is provided, including:
a microphone array configured to collect an audio signal, the microphone array including at least two annular structures;
a processor connected to the microphone array, the processor being configured to process the audio signal;
a memory storing a computer program; and
a housing encapsulating the microphone array and the processor,
the computer program, when executed by the processor, causing the processor to perform the foregoing speech recognition method.

In the speech recognition method and apparatus, the computer device, and the electronic device, by performing beamforming processing on an audio signal collected by a microphone array in a plurality of different target directions, a plurality of corresponding beam signals can be obtained, so that sound enhancement processing is performed in different target directions, and beam signals obtained after enhancement processing is performed in the target directions can be clearly extracted. That is, in the method, sound source directions do not need to be considered, and by performing beamforming processing in different target directions, at least one target direction is close to an actual sound generating direction. Therefore, at least one beam signal enhanced in a target direction is clear, so that speech recognition accuracy can be improved when speech recognition is performed according to all beam signals.

### BRIEF DESCRIPTION OF THE DRAWINGS

FIG. 1 is a schematic flowchart of a speech recognition method according to an embodiment.
FIG. 2 is a schematic diagram of a microphone array according to an embodiment.
FIG. 3 is a schematic diagram of beam signals obtained by performing beamforming processing in four target directions according to an embodiment.
FIG. 4 is a schematic diagram of interaction between beamformers and speech recognition models according to an embodiment.
FIG. 5 is a schematic structural diagram of a speech recognition model according to an embodiment.
FIG. 6 is a schematic diagram of a signal when a neural network node of a speech recognition model detects a wakeup word according to an embodiment.
FIG. 7 is an architectural diagram of speech recognition according to an embodiment.
FIG. 8 is a schematic diagram of a microphone array according to an embodiment.
FIG. 9 is a schematic diagram of a microphone array according to another embodiment.
FIG. 10 is a schematic flowchart of steps of a speech recognition method according to an embodiment.
FIG. 11 is a structural block diagram of a speech recognition apparatus according to an embodiment.
FIG. 12 is a structural block diagram of a computer device according to an embodiment.

### DESCRIPTION OF EMBODIMENTS

To make the objectives, technical solutions, and advantages of this application clearer and more understandable, this application is further described in detail below with reference to the accompanying drawings and the embodiments. It is to be understood that the embodiments described herein are only used for explaining this application, and are not used for limiting this application.

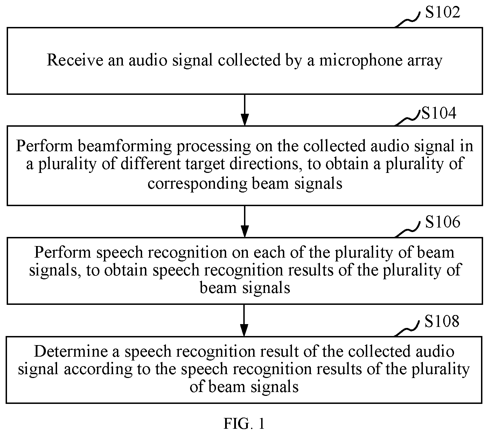

In an embodiment, a speech recognition method is provided. This embodiment is mainly described by using an example in which the method is applied to a speech recognition device. The speech recognition device may be an electronic device into which a speech interaction technology is implanted. The electronic device may be an intelligent terminal, an intelligent household appliance, a robot, or the like, which is capable of implementing human-machine interaction. As shown in FIG. 1, the speech recognition method includes the following steps:

S102. Receive an audio signal collected by a microphone array.

The microphone array refers to arrangement of microphones, and is formed by a number of microphones. Each microphone collects an analog signal of an environmental sound, and converts the analog signal into a digital audio signal by using audio collection devices such as an analog-to-digital converter, a gain controller, and a codec.

Microphone arrays arranged in different manners have different audio signal collection effects.

For example, a one-dimensional microphone array may be used as the microphone array. Centers of array elements of the one-dimensional microphone array are located on the same straight line. The one-dimensional microphone array may be further classified into a uniform linear array (ULA) and a nested linear array according to whether distances between adjacent array elements are the same. The ULA is the simplest array topology structure. Distances between array elements of the ULA are equal, phases of the array elements are the same, and sensitivity of the array elements is the same. The nested linear array may be regarded as an overlap of several groups of ULAs, and is a special type of non-uniform array. Such a linear microphone array cannot distinguish sound source directions across the entire 360-degree range in a horizontal direction, but can only distinguish sound source directions within a 180-degree range. Such a linear microphone array may be applied to an application environment of the 180-degree range, for example, to an application environment where the speech recognition device is placed against a wall, or the speech recognition device is located in an environment in which a sound source is located within 180-degree range.

For example, a two-dimensional microphone array, that is, a planar microphone array, may be used as the microphone array. Centers of array elements of the two-dimensional microphone array are distributed on a plane. The two-dimensional microphone array may be classified into an equilateral triangular array, a T-shaped array, a uniform circular array, a uniform square array, a coaxial circular array, a circular or rectangular planar array, and the like according to a geometrical shape of the array. The planar microphone array may obtain information about a horizontal azimuth and a vertical azimuth of a signal. Such a planar microphone array may be applied to an application environment covering the 360-degree range, for example, to an application environment where the speech recognition device needs to receive sounds from different directions.

For example, a three-dimensional microphone array, that is, a stereoscopic microphone array, may be used as the microphone array. Centers of array elements of the three-dimensional microphone array are distributed in a stereoscopic space. The three-dimensional microphone array may be classified into a tetrahedral array, a cubic array, a cuboid array, a spherical array, and the like according to a stereoscopic shape of the array. The stereoscopic microphone array may obtain three types of information, that is, a horizontal azimuth and a vertical azimuth of a signal, and a distance between a sound source and a microphone array reference point.

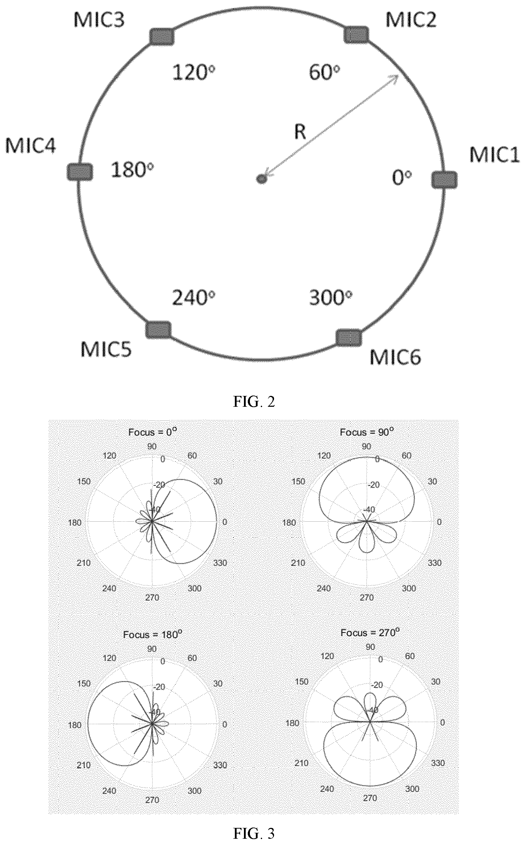

Description is given hereinafter by using an example in which the microphone array is annular. An annular microphone array in an embodiment is shown in FIG. 2. In this embodiment, 6 physical microphones are used, and are sequentially mounted on a 0-degree azimuth, a 60-degree azimuth, a 120-degree azimuth, a 180-degree azimuth, a 240-degree azimuth, and a 300-degree azimuth of a circumference of a circle with a radius R. The 6 physical microphones form one annular microphone array. Each microphone collects an analog signal of an environmental sound, and converts the analog signal into a digital audio signal by using audio collection devices such as an analog-to-digital converter, a gain controller, and a codec. The annular microphone array can collect sound signals in 360 degrees.

S104. Perform beamforming processing on the collected audio signal in a plurality of different target directions, to obtain a plurality of corresponding beam signals.

Beamforming is to perform latency or phase compensation, and amplitude-weighting processing on audio signals outputted by microphones in a microphone array, to form beams pointing to specific directions. For example, beamforming is performed on the audio signal collected by the microphone array in a 0-degree direction, a 90-degree direction, a 180-degree direction, or a 270-degree direction, to form a beam pointing to the 0-degree direction, the 90-degree direction, the 180-degree direction, or the 270-degree direction.

In an example, a beamformer may be used for performing beamforming processing on the audio signal in set directions. The beamformer is an algorithm designed based on a specific microphone array, and can enhance audio signals from one or more specific target directions and suppress audio signals from the non-target directions. The beamformer may be any type of beamformer capable of setting directions, and includes, but is not limited to, a superdirective beamformer and a beamformer based on a minimum variance distortionless response (MVDR) algorithm or a multiple signal classification (MUSIC) algorithm.

In this embodiment, a plurality of beamformers are provided, and the beamformers perform beamforming processing in different directions. In an example, digital audio signals of the plurality of microphones form a microphone array signal, and the microphone array signal is transmitted to the plurality of beamformers. The beamformers perform enhancement processing on audio signals in different set directions, and suppress audio signals in other directions. The further the audio signals deviate from the set direction, the more the audio signals are suppressed. In this way, audio signals near the set direction can be extracted.

In an embodiment, four beamformers are provided, and respectively perform beamforming processing on audio signals in a 0-degree direction, a 90-degree direction, a 180-degree direction, and a 270-degree direction. FIG. 3 is a schematic diagram of a plurality of beam signals obtained by performing beamforming processing on audio signals in a plurality of directions. It can be understood that for audio signals inputted into the beamformers, an arrangement manner of a microphone array collecting the audio signals is not limited. By performing beamforming processing in a plurality of target directions, enhancement processing can be performed on audio signals in the target directions, and interference from audio signals in other directions is reduced. Therefore, in an example, the microphone array collecting the audio signals have at least two microphones in different directions.

For example, audio signals are collected by using the microphone array shown in FIG. 2. As shown in FIG. 3, digital audio signals of a plurality of microphones form a microphone array signal. A sound in a 0-degree direction remains unchanged (a gain of 0 dB), suppression greater than 9 dB (a gain of about -9 dB) is performed on sounds in a 60-degree direction and a 330-degree direction, and suppression greater than 20 dB is performed on sounds in a 90-degree direction and a 270-degree direction. A shorter distance between a line and the center of the circle indicates more suppression on a sound in the direction, thereby enhancing an audio signal in the 0-degree direction and reducing interference from audio signals in other directions.

Referring to FIG. 3 again, digital audio signals of a plurality of microphones form a microphone array signal. A sound in a 90-degree direction remains unchanged (a gain of 0 dB), suppression greater than 9 dB (a gain of about -9 dB) is performed on sounds in a 30-degree direction and a 150-degree direction, and suppression greater than 20 dB is performed on sounds in a 0-degree direction and a 180-degree direction. A shorter distance between a line and the center of the circle indicates more suppression on a sound in the direction, thereby enhancing an audio signal in the 90-degree direction and reducing interference from audio signals in other directions.

Referring to FIG. 3 again, digital audio signals of a plurality of microphones form a microphone array signal. A sound in a 180-degree direction is unchanged (a 0 dB gain), suppression greater than 9 dB (about a -9 dB gain) is performed on sounds in a 120-degree direction and a 240-degree direction, and suppression greater than 20 dB is performed on sounds in a 90-degree direction and a 270-degree direction. A shorter distance between a line and the center of the circle indicates more suppression on a sound in the direction, thereby enhancing an audio signal in the 180-degree direction and reducing interference from audio signals in other directions.

Referring to FIG. 3 again, digital audio signals of a plurality of microphones form a microphone array signal. A sound in a 270-degree direction is unchanged (a 0 dB gain), suppression greater than 9 dB (about a -9 dB gain) is performed on sounds in a 210-degree direction and a 330-degree direction, and suppression greater than 20 dB is performed on sounds in a 180-degree direction and a 0-degree direction. A shorter distance between a line and the center of the circle indicates more suppression on a sound in the direction, thereby enhancing an audio signal in the 270-degree direction and reducing interference from audio signals in other directions.

It can be understood that to enhance audio signals in other target directions, in other embodiments, more or fewer beamformers may be provided, to extract beam signals in other directions. By performing beamforming processing in a plurality of different set target directions, for beam signals of the beamformers, audio signals in the target directions can be enhanced, and interference from audio signals in other directions is reduced. In a plurality of audio signals in the target directions, there is at least one beam signal close to an actual sound direction, that is, there is at least one beam signal that can reflect an actual sound, and interference from noises in other directions is reduced.

In this embodiment, for audio signals collected by a microphone array, sound source directions do not need to be identified, and beamforming processing is performed on all the audio signals in a plurality of different set target directions. The advantage of such processing lies in that beam signals in the plurality of target directions can be obtained, and there is definitely at least one beam signal close to an actual sound direction, that is, at least one beam signal can reflect an actual sound. For a beamformer in this direction, enhancement processing is performed on an audio signal in the direction, and suppression processing is performed on audio signals in other directions, so that an audio signal at an angle corresponding to the actual sound direction can be enhanced. That is, audio signals in other directions are reduced, so that the audio signal in the direction can be clearly extracted, and interference from the audio signals (including noises) in other directions is reduced.

S106. Perform speech recognition on each of the plurality of beam signals, to obtain speech recognition results of the plurality of beam signals.

In this embodiment, speech recognition is performed on each of the plurality of beam signals. Because the plurality of beam signals are obtained by performing beamforming processing on the audio signal in the plurality of different set target directions, that is, one beam signal is obtained by performing enhancement processing on an audio signal from a set target direction and performing suppression processing on audio signals not from the set target direction, each beam signal can reflect a sound enhanced signal of an audio signal in a different direction, and for the sound enhanced signals including human voices, speech recognition accuracy can be improved by performing speech recognition on the beam signal in each the direction.

S108. Determine a speech recognition result of the collected audio signal according to the speech recognition results of the plurality of beam signals.

By performing speech recognition on each of the plurality of beam signals, speech recognition accuracy of an audio signal in a corresponding direction can be improved, and speech recognition results of audio signals coming from a plurality of directions can be obtained according to the speech recognition results of the plurality of beam signals in the directions. That is, a speech recognition result of the collected audio signal is obtained with the speech recognition results obtained after sounds in all the directions are enhanced.

In the speech recognition method, by performing beamforming processing on an audio signal collected by a microphone array in a plurality of different set target, a plurality of corresponding beam signals are obtained, so that after sound enhancement processing is performed in different target directions, beam signals obtained after the enhancement processing is performed in the target directions are clearly extracted. That is, in the method, sound source directions do not need to be considered, and by performing beamforming processing in different target directions, at least one target direction is close to an actual sound generating direction. Therefore, at least one beam signal enhanced in a target direction is clear, so that speech recognition accuracy can be improved when speech recognition is performed according to all beam signals.

In another embodiment, the performing speech recognition on each of the plurality of beam signals, to obtain speech recognition results of the plurality of beam signals, includes: respectively inputting the plurality of beam signals into corresponding speech recognition models, and performing, by the speech recognition models, speech recognition on corresponding beam signals in parallel, to obtain the speech recognition results of the plurality of beam signals.

In an example, the speech recognition models are pre-trained by using neural network models. Calculations are made layer by layer by using pre-trained neural network parameters from feature vectors corresponding to the plurality of beam signals, such as energy and sub-band features, to perform speech recognition.

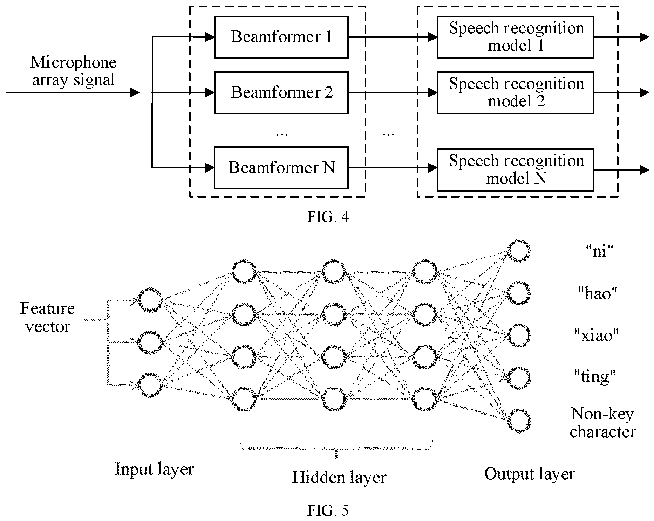

In another embodiment, the number of the speech recognition models is configured corresponding to that of the beamformers, that is, one beamformer corresponds to one speech recognition model. As shown in FIG. 4, in an example, the plurality of beam signals are respectively inputted into corresponding speech recognition models, and the speech recognition models perform speech recognition on the corresponding beam signals in parallel, to obtain the speech recognition results of the plurality of beam signals.

In this embodiment, speech recognition models the number of which corresponds to that of the beamformers are provided, to perform speech recognition on the plurality of beam signals in parallel, which can improve efficiency of speech recognition.

In an example, one beamformer and one speech recognition model are paired to run on a central processing unit (CPU) or a digital signal processor (DSP). That is, beamformers and speech recognition models are paired to run on a plurality of CPUs, and then speech recognition results of the speech recognition models are combined to obtain a final speech recognition result. The software execution speed can be greatly increased by using such parallel calculation.

In this embodiment, different hardware calculating units are used for processing, to share the calculation amount, thereby improving system stability, and increasing the response speed of speech recognition. In an example, N beamformers are divided into M groups, where M≤N. In each group, calculation is performed by using a designated hardware calculating unit (for example, a DSP or a CPU core). Similarly, N speech recognition models are divided into M groups, where M≤N. In each group, calculation is performed by using a designated hardware calculating unit (for example, a DSP or a CPU core).

The speech recognition method in this application may be applied to keyword detection (for example, spoken keyword spotting or spoken term detection).

The keyword detection is a sub-field of the speech recognition field. An objective of the keyword detection is to detect all appearing locations of a designated word in an audio signal. In an embodiment, a keyword detection method may be applied to the field of wakeup word detection. A wakeup word refers to a set speech instruction. When a wakeup word is detected, a speech recognition device in a dormant state or a lock screen state enters an instruction waiting state.

The speech recognition result includes a keyword detection result. The determining a speech recognition result of the collected audio signal according to the speech recognition results of the plurality of beam signals includes: determining a keyword detection result of the collected audio signal according to keyword detection results of the plurality of beam signals.

The speech recognition models receive beam signals outputted by corresponding beamformers, detect whether the beam signals include a keyword, and output a detection result. That is, the speech recognition models are configured to detect, according to the beam signals received in respective directions, whether audio signals coming from all the directions include a keyword. For example, the keyword includes 4 characters. As shown in FIG. 5, output values of all nodes are calculated layer by layer from feature vectors of the beam signals (such as energy and sub-band features) by using pre-trained network parameters, and the keyword detection result is finally obtained at an output layer.

In an embodiment, the detection result may be a binary symbol. For example, outputting 0 indicates that no keyword is detected, and outputting 1 indicates that a keyword is detected. The determining a keyword detection result of the collected audio signal according to keyword detection results of the plurality of beam signals includes: determining, in a case that a keyword detection result of any beam signal is that a keyword is detected, that the keyword detection result of the collected audio signal is that a keyword is detected, that is, determining, in a case that at least one of the plurality of speech recognition models detects a keyword, that a keyword is detected.

In addition, the keyword detection result may further include a keyword detection probability. The determining a keyword detection result of the collected audio signal according to keyword detection results of the plurality of beam signals includes: determining, in a case that a keyword detection probability of at least one beam signal is greater than a preset value, that the keyword detection result of the collected audio signal is that a keyword is detected.

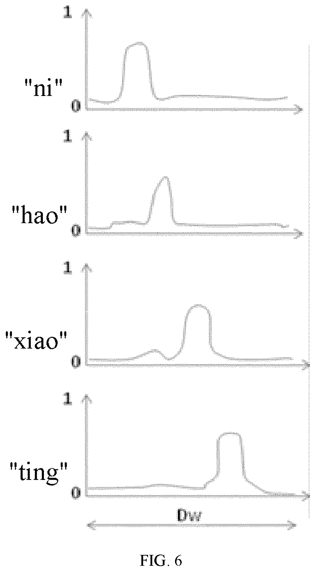

As shown in FIG. 5, it is assumed that a keyword is "ni hao xiao ting", and the output layer of the neural network has 5 nodes, respectively representing probabilities that a segment of speech belongs to four key characters of "ni", "hao", "xiao", and "ting", and a non-key character. If a wakeup word appears in a time window Dw, signals similar to those shown in FIG. 6 will appear at output nodes of the neural network. In this case, it can be sequentially observed that probabilities of the four key characters of "ni", "hao", "xiao", and "ting" increase. By accumulating probabilities of the four key characters in the wakeup word in the time window, whether a keyword appears can be determined.

In an embodiment, the determining a keyword detection result of the collected audio signal according to keyword detection results of the plurality of beam signals includes: inputting keyword detection probabilities of the plurality of beam signals into a pre-trained classifier, and determining whether the collected audio signal includes a keyword according to an output of the classifier.

The speech recognition models output probabilities that a wakeup word appears in respective directions, and a classifier is used for performing final detection determination. The classifier includes, but is not limited to, various classification algorithms such as a neural network, a support vector machine (SVM), and a decision tree. The classifier is also referred to as a post-processing logic module in this embodiment.

In another embodiment, the determining a speech recognition result of the collected audio signal according to the speech recognition results of the plurality of beam signals includes: obtaining linguistic scores and/or acoustic scores of the speech recognition results of the plurality of beam signals, and determining a speech recognition result having the highest score as the speech recognition result of the collected audio signal.

The speech recognition method may be applied to a continuous or non-continuous speech recognition field. Outputs of a plurality of beamformers are simultaneously fed into a plurality of speech recognition models, and an output of the speech recognition model that has the best speech recognition effect is used as a final speech recognition result. In an example, the final speech recognition result may be a speech recognition result having the highest acoustic score or linguistic score, or a speech recognition result having both the highest acoustic score and the highest linguistic score.

In another embodiment, the speech recognition method further includes: performing suppression processing on an echo caused by an audio signal outputted by a speech recognition device.

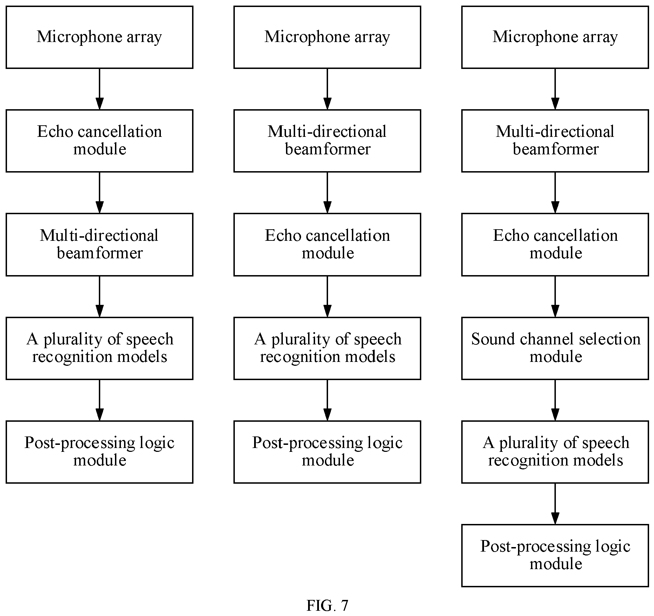

For a speech recognition device with an audio playing function, such as a smart speaker, to avoid interference from a sound played by the speech recognition device on the speech recognition, referring to FIG. 7, an echo cancellation module is further provided in an embodiment of this application. The echo cancellation module can remove an echo that is collected by a microphone because of playing by the speech recognition device. As shown in FIG. 7, the echo cancellation module may be placed before or behind a beamformer. In an example, in a case that the number of sound channels on which a multi-directional beamformer outputs sounds is less than the number of of microphones, the calculation amount can be effectively reduced by placing the echo cancellation module behind the multi-directional beamformer.

In an embodiment, as shown in FIG. 7, a plurality of output signals of the echo cancellation module or the beamformer may pass through one sound channel selection module, to further reduce the number of output sound channels, so as to reduce the calculation amount and memory consumption of a plurality of subsequent speech recognition modules.

In case of wakeup word detection, for example, a plurality of beam signals outputted by the multi-directional beamformer is transmitted to a plurality of speech recognition models for performing wakeup word detection. After obtaining a plurality of wakeup word detection results by performing wakeup word detection, the plurality of speech recognition models output the plurality of wakeup word detection results to the post-processing logic module for final determination, to determine whether a wakeup word appears in a current acoustic scene.

In an embodiment, an electronic device is provided, including: a microphone array configured to collect an audio signal, the microphone array including at least two annular structures;
a processor connected to the microphone array, the processor being configured to process the audio signal;
a memory storing a computer program; and
a housing encapsulating the microphone array and the processor,
the computer program, when executed by the processor, causing the processor to perform the speech recognition method according to any of the foregoing embodiments.

In a case that the microphone array is an annular array, microphones in the annular array may be mounted on a standard circular circumference, or may be mounted on an elliptical circumference. The microphones may be uniformly distributed on the circular circumference, or may be non-uniformly distributed on the circular circumference. The microphone array with an annular structure can collect audio signals in 360 degrees, thereby broadening directions of sound source detection, which is applicable to a farfield environment.

In an embodiment, at least three microphones are provided on each annular structure. That is, three or more microphones are mounted on each annular structure, to form a multi-layer annular array. Theoretically, more microphones on the annular array leads to higher precision of sound source direction calculation and better enhancement quality of sounds in target directions. With considerations into the fact that more microphones result in higher costs and computational complexity, 4 to 8 microphones are provided on each annular structure.

In an embodiment, to reduce complexity of sound detection, microphones on each annular structure are uniformly disposed.

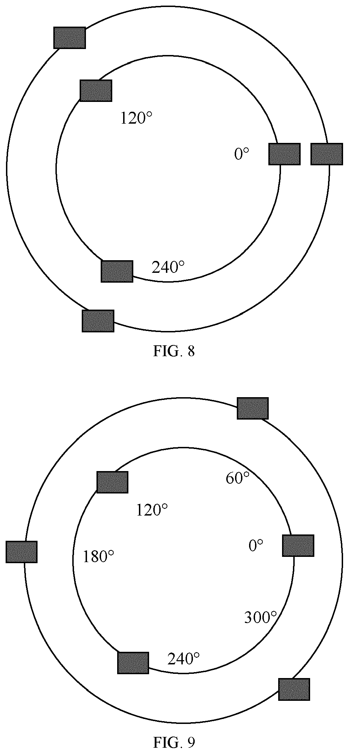

In an embodiment, the annular structures are located at concentric circles, and microphones on two adjacent annular structures are disposed in the same directions. That is, the microphones on different annular structures are disposed at the same angles. As shown in FIG. 8, in case of two annular structures for example, three microphones are provided on each annular structure. Inner microphones and outer microphones are disposed at 0 degrees, 120 degrees, and 240 degrees. The number of microphones in the microphone array with the multi-layer annular structure is increased, so that the array can achieve better directionality.

In an embodiment, an angle exists between microphones on any two annular structures. That is, microphones on different annular structures are staggered. As shown in FIG. 9, in case of two annular structures for example, three microphones are provided on each annular structure. On an inner annular structure, microphones are respectively disposed at 0 degrees, 120 degrees, and 240 degrees; and on an outer annular structure, microphones are respectively disposed at 60 degrees, 180 degrees, and 300 degrees. In such a microphone array, relative locations of microphones are more diversified. For example, inner microphones and outer microphones have different angles between each other, so that sound sources in some directions are better detected and enhanced. Denser distribution of microphones improves spatial sampling, and sound signals at some frequencies are better detected and enhanced.

In another embodiment, a microphone may be mounted at the center of an annular array to form a microphone array. By placing a microphone at the center, the number of microphones is increased, so that directionality of the array can be improved. For example, the microphone at the center may be combined with any microphone on the circumference to form a linear array having two microphones, facilitating detection of sound source directions. The microphone at the center may alternatively be combined with a plurality of microphones on the circumference to form microphone sub-arrays with different shapes, facilitating detection of signals in different directions or at different frequencies.

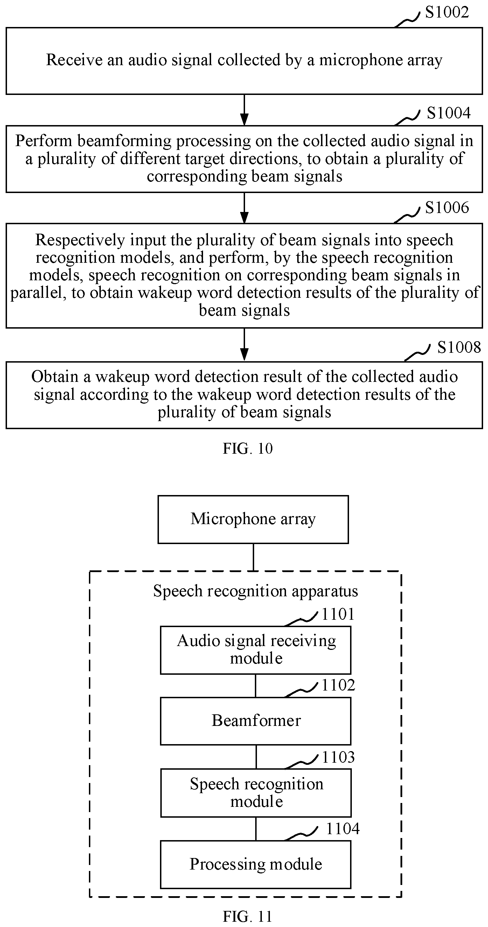

The speech recognition method in this application may be applied to keyword detection, for example, wakeup word detection, or any continuous or non-continuous speech recognition field. The speech recognition method is described below by using an example in which the speech recognition method is applied to wakeup word detection. As shown in FIG. 10, the method includes the following steps:

S1002. Receive an audio signal collected by a microphone array.

An arrangement manner of the microphone array is not limited. For example, when an electronic device is placed against a wall, or the electronic device is located in an environment in which sound sources covers a 180-degree range, the microphone array may be arranged linearly. For example, when the electronic device needs to receive sounds from different directions, for example, when the electronic device is located in an application environment of a 360-degree range, an annular microphone array may be used as the microphone array. Arrangement manners of an annular microphone array are respectively shown in FIG. 2, FIG. 8, and FIG. 9. Each microphone collects an analog signal of an environmental sound, and converts the analog signal into a digital audio signal by using audio collection devices such as an analog-to-digital converter, a gain controller, and a codec.

S 1004. Perform beamforming processing on the collected audio signal in a plurality of different target directions, to obtain a plurality of corresponding beam signals.

S 1006. Respectively input the plurality of beam signals into speech recognition models, and perform, by the speech recognition models, speech recognition on corresponding beam signals in parallel, to obtain wakeup word detection results of the plurality of beam signals.

In this embodiment, speech recognition models the number of which corresponds to that of beamformers are provided, to perform speech recognition on the plurality of beam signals in parallel, which can improve efficiency of wakeup word detection.

FIG. 5 shows a structure of a speech recognition model according to an embodiment. The speech recognition model receives a beam signal outputted by a corresponding beamformer, detects whether the beam signal includes a wakeup word signal, and outputs a detection result. For example, the wakeup word includes 4 characters. As shown in FIG. 5, output values of all nodes are calculated layer by layer from feature vectors of the beam signal (such as energy and sub-band features) by using pre-trained network parameters, and the wakeup word or probabilities of key characters in the wakeup word are finally obtained at an output layer. As shown in FIG. 5, supposing the wakeup word is "ni hao xiao ting", the output layer of the neural network has 5 nodes, respectively representing probabilities that a segment of speech belongs to the four key characters of "ni", "hao", "xiao" and "ting", and a non-key character.

S 1008. Obtain a wakeup word detection result of the collected audio signal according to the wakeup word detection results of the plurality of beam signals.

The wakeup word detection result may be a binary symbol (for example, outputting 0 indicates that no wakeup word is detected, and outputting 1 indicates that a wakeup word is detected), or may be an output probability (for example, a larger probability value indicates a larger probability that a wakeup word is detected). In an example, when at least one of the speech recognition models detects a wakeup word, it is determined that a wakeup word is detected. If outputs of the speech recognition models are probabilities that a wakeup word appears, when an output probability of at least one speech recognition model is greater than a preset value, it is determined that a wakeup word is detected. Alternatively, the speech recognition models output probabilities that a wakeup word appears in respective directions, and a classifier is used for performing final detection determination. That is, wakeup word detection probabilities of the plurality of beam signals are inputted into the classifier, and whether the collected audio signal includes a wakeup word is determined according to an output of the classifier.

In the foregoing method, an audio signal is collected by using a microphone array, filtering is performed on a microphone array signal by using a multi-directional beamformer to form a plurality of directional enhanced signals, a wakeup word in the directional enhanced signals is monitored by using a plurality of speech recognition models, and a final determination result is obtained by combining wakeup word detection results outputted by the plurality of speech recognition models. In the method, sound source directions do not need to be considered, and by performing beamforming processing in different target directions, at least one target direction is close to an actual sound generating direction. Therefore, at least one beam signal enhanced in a target direction is clear, so that accuracy of wakeup word detection in the direction can be improved by performing wakeup word detection according to all beam signals.

A speech recognition apparatus is provided. As shown in FIG. 11, the apparatus includes:
an audio signal receiving module 1101, configured to receive an audio signal collected by a microphone array;
a beamformer 1102, configured to perform beamforming processing on the audio signal in a plurality of different target directions, to obtain a plurality of corresponding beam signals;
a speech recognition module 1103, configured to perform speech recognition on each of the plurality of beam signals, to obtain speech recognition results of the plurality of beam signals; and
a processing module 1104, configured to determine a speech recognition result of the audio signal according to the speech recognition results of the plurality of beam signals.

In the speech recognition apparatus, by performing beamforming processing on an audio signal collected by a microphone array in a plurality of different target directions, a plurality of corresponding beam signals can be obtained, so that sound enhancement processing is performed in different target directions, and beam signals obtained after enhancement processing is performed in the target directions can be clearly extracted. That is, by the method, sound source directions do not need to be considered, and by performing beamforming processing in different target directions, at least one target direction is close to an actual sound generating direction. Therefore, at least one beam signal enhanced in a target direction is clear, so that speech recognition accuracy can be improved by performing speech recognition according to all beam signals.

In another embodiment, the processing module is configured to determine a keyword detection result of the audio signal according to keyword detection results of the plurality of beam signals.

In another embodiment, the processing module is configured to determine, in a case that a keyword detection result of any beam signal is that a keyword is detected, that the keyword detection result of the audio signal is that a keyword is detected.

In another embodiment, the keyword detection result includes a keyword detection probability. The processing module is configured to determine, in a case that a keyword detection probability of at least one beam signal is greater than a preset value, that the keyword detection result of the audio signal is that a keyword is detected.

In another embodiment, the processing module is configured to input keyword detection probabilities of the plurality of beam signals into a classifier, and determine whether the audio signal includes a keyword according to an output of the classifier.

In another embodiment, the processing module is configured to calculate linguistic scores and/or acoustic scores of the speech recognition results of the plurality of beam signals, and determine a speech recognition result having the highest score as the speech recognition result of the audio signal.

In another embodiment, the speech recognition module is configured to respectively input the plurality of beam signals into corresponding speech recognition models, for the speech recognition models to perform speech recognition on corresponding beam signals in parallel, to obtain the speech recognition results of the plurality of beam signals.

As shown in FIG. 4, one beamformer corresponds to one speech recognition model. The speech recognition module is configured to respectively input the plurality of beam signals into corresponding speech recognition models, for the speech recognition models to perform speech recognition on the corresponding beam signals in parallel, to obtain the speech recognition results of the plurality of beam signals.

In another embodiment, the speech recognition apparatus further includes an echo cancellation module, configured to perform suppression processing on an echo of an audio signal outputted by a speech recognition device.

In another embodiment, the speech recognition apparatus further includes a sound channel selection module. A plurality of output signals of the echo cancellation module or the beamformer may pass through one sound channel selection module, to further reduce the number of output sound channels, so as to reduce the calculation amount and memory consumption of a plurality of subsequent speech recognition modules.

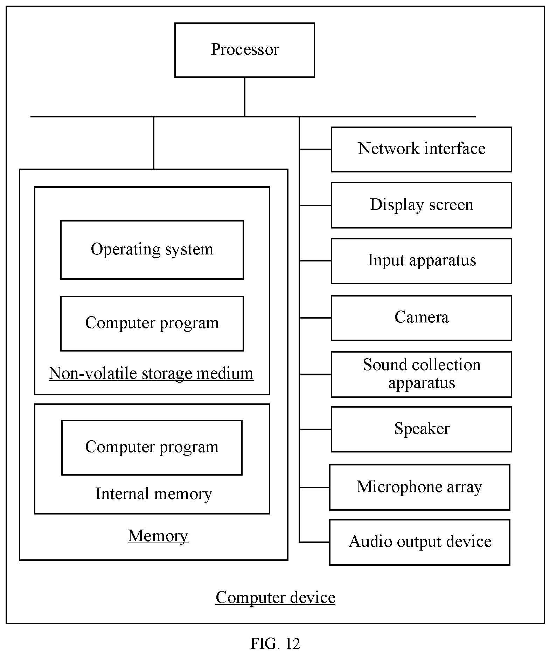

FIG. 12 is a diagram of an internal structure of a computer device according to an embodiment. The computer device may be a speech recognition device. As shown in FIG. 12, the computer device includes a processor, a memory, a network interface, an input apparatus, a display screen, a microphone array, and an audio output device that are connected by using a system bus. The microphone array collects audio signals. The memory includes a non-volatile storage medium and an internal memory. The non-volatile storage medium of the computer device stores an operating system and may further store a computer program, the computer program, when executed by the processor, causing the processor to implement a speech recognition method.

The internal memory may also store a computer program, the computer program, when executed by the processor, causing the processor to perform the speech recognition method. The display screen of the computer device may be a liquid crystal display screen or an electronic ink display screen. The input apparatus of the computer device may be a touch layer covering the display screen, or may be a key, a trackball or a touchpad disposed on a housing of the computer device, or may be an external keyboard, touchpad, mouse, or the like. The audio output device includes a speaker, configured to play a sound.

A person skilled in the art can understand that the structure shown in FIG. 12 is merely a block diagram of structures related to the solution of this application, and does not constitute a limitation on a computer device to which the solution of this application is applied. In particular, the computer device may include more or fewer components than those shown in the figure, a combination of some components, or different component arrangements.

In an embodiment, the speech recognition apparatus provided in this application may be implemented in the form of a computer program. The computer program may be run on the computer device shown in FIG. 12. The memory of the computer device may store program modules forming the speech recognition apparatus, for example, the audio signal receiving module, the beamformer, and the speech recognition module that are shown in FIG. 11. The computer program formed by the program modules causes the processor to perform the steps in the speech recognition method in the embodiments of this application described in this specification.

For example, the computer device shown in FIG. 12 may perform, by using the audio signal receiving module in the speech recognition apparatus shown in FIG. 11, the step of receiving an audio signal collected by a microphone array. The computer device may perform, by using the beamformer, the step of performing beamforming processing on the audio signal in a plurality of different set target directions, to obtain a plurality of corresponding beam signals. The computer device may perform, by using the speech recognition module, the step of performing speech recognition according to the plurality of beam signals.

A computer device includes a memory and a processor, the memory storing a computer program, and the computer program, when executed by the processor, causing the processor to perform the following operations:
receiving an audio signal collected by a microphone array;
performing beamforming processing on the audio signal in a plurality of different target directions, to obtain a plurality of corresponding beam signals;
performing speech recognition on each of the plurality of beam signals, to obtain speech recognition results of the plurality of beam signals; and
determining a speech recognition result of the audio signal according to the speech recognition results of the plurality of beam signals.

In another embodiment, the speech recognition result includes a keyword detection result, and the determining a speech recognition result of the audio signal according to the speech recognition results of the plurality of beam signals includes: determining a keyword detection result of the audio signal according to keyword detection results of the plurality of beam signals.

In another embodiment, the determining a keyword detection result of the audio signal according to keyword detection results of the plurality of beam signals includes: determining, in a case that a keyword detection result of any beam signal is that a keyword is detected, that the keyword detection result of the audio signal is that a keyword is detected.

In another embodiment, the keyword detection result includes a keyword detection probability, and the determining a keyword detection result of the audio signal according to keyword detection results of the plurality of beam signals includes: determining, in a case that a keyword detection probability of at least one beam signal is greater than a preset value, that the keyword detection result of the audio signal is that a keyword is detected.

In another embodiment, the determining a keyword detection result of the audio signal according to keyword detection results of the plurality of beam signals includes: inputting keyword detection probabilities of the plurality of beam signals into a classifier, and determining whether the audio signal includes a keyword according to an output of the classifier.

In another embodiment, the determining a speech recognition result of the audio signal according to the speech recognition results of the plurality of beam signals includes: obtaining linguistic scores and/or acoustic scores of the speech recognition results of the plurality of beam signals, and determining a speech recognition result having the highest score as the speech recognition result of the audio signal.

In another embodiment, the performing speech recognition on each of the plurality of beam signals, to obtain speech recognition results of the plurality of beam signals includes: respectively inputting the plurality of beam signals into corresponding speech recognition models, and performing, by the speech recognition models, speech recognition on corresponding beam signals in parallel, to obtain the speech recognition results of the plurality of beam signals.

In another embodiment, the speech recognition method further includes: performing suppression processing on an echo of an audio signal outputted by a speech recognition device.

A person of ordinary skill in the art may understand that all or some of the procedures of the methods in the embodiments may be implemented by a computer program instructing relevant hardware. The program may be stored in a non-volatile computer-readable storage medium. When the program is run, the procedures of the methods in the embodiments are performed. Any reference to memory, storage, database, or other media used in the embodiments provided in this application may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external high-speed cache memory. As an illustration instead of a limitation, the RAM is available in various forms, such as a static RAM (SRAM), a dynamic RAM (DRAM), a synchronous DRAM (SDRAM), a double data rate SDRAM (DDR SDRAM), an enhanced SDRAM (ESDRAM), a synchronous link (Synchlink) DRAM (SLDRAM), a rambus direct RAM (RDRAM), a direct rambus dynamic RAM (DRDRAM), and a rambus dynamic RAM (RDRAM).

The technical features in the foregoing embodiments may be combined in an arbitrary manner. For purpose of concise description, not all possible combinations of the technical features in the embodiments are described. However, as long as combinations of the technical features do not cause a conflict, the combinations of the technical features are considered as falling within the scope described in this specification.

The foregoing embodiments show only several implementations of this application and are described in detail, which, however, are not to be construed as a limitation to the patent scope of this application. It should be noted that a person of ordinary skill in the art may further make several variations and improvements without departing from the ideas of this application, and such variations and improvements fall within the protection scope of this application. Therefore, the protection scope of this patent application is best defined by the appended claims.

## Claims

1. A speech recognition method, comprising:
receiving an audio signal collected by a microphone array;
performing beamforming processing on the audio signal in a plurality of different target directions, to obtain a plurality of corresponding beam signals;
performing speech recognition on each of the plurality of beam signals, to obtain speech recognition results of the plurality of beam signals; and
determining a speech recognition result of the audio signal according to the speech recognition results of the plurality of beam signals.

2. The method according to claim 1, wherein the speech recognition result comprises a keyword detection result, and
the determining a speech recognition result of the audio signal according to the speech recognition results of the plurality of beam signals comprises: determining a keyword detection result of the audio signal according to keyword detection results of the plurality of beam signals.

3. The method according to claim 2, wherein the determining a keyword detection result of the audio signal according to keyword detection results of the plurality of beam signals comprises:
determining, in a case that a keyword detection result of any beam signal is that a keyword is detected, that the keyword detection result of the audio signal is that a keyword is detected.

4. The method according to claim 2, wherein the keyword detection result comprises a keyword detection probability, and
the determining a keyword detection result of the audio signal according to keyword detection results of the plurality of beam signals comprises:
determining, in a case that a keyword detection probability of at least one beam signal is greater than a preset value, that the keyword detection result of the audio signal is that a keyword is detected.

5. The method according to claim 2, wherein the keyword detection result comprises a keyword detection probability, and
the determining a keyword detection result of the audio signal according to keyword detection results of the plurality of beam signals comprises:
inputting keyword detection probabilities of the plurality of beam signals into a classifier, and determining whether the audio signal comprises a keyword according to an output of the classifier.

6. The method according to claim 1, wherein the determining a speech recognition result of the audio signal according to the speech recognition results of the plurality of beam signals comprises:
obtaining linguistic scores and/or acoustic scores of the speech recognition results of the plurality of beam signals; and
determining a speech recognition result having the highest score as the speech recognition result of the audio signal.

7. The method according to claim 1, wherein the performing speech recognition on each of the plurality of beam signals, to obtain speech recognition results of the plurality of beam signals, comprises:
respectively inputting the plurality of beam signals into corresponding speech recognition models, and performing, by the speech recognition models, speech recognition on corresponding beam signals in parallel, to obtain the speech recognition results of the plurality of beam signals.

8. The method according to claim 1, wherein the method further comprises performing suppression processing on an echo of an audio signal outputted by a speech recognition device.

9. A speech recognition apparatus, comprising:
an audio signal receiving module, configured to receive an audio signal collected by a microphone array;
a beamformer, configured to perform beamforming processing on the audio signal in a plurality of different target directions, to obtain a plurality of corresponding beam signals;
a speech recognition module, configured to perform speech recognition on each of the plurality of beam signals, to obtain speech recognition results of the plurality of beam signals; and
a processing module, configured to determine a speech recognition result of the audio signal according to the speech recognition results of the plurality of beam signals.

10. A computer device, comprising a memory and a processor, the memory storing a computer program, the computer program, when executed by the processor, causing the processor to perform the steps of the method according to any one of claims 1 to 8.

11. An electronic device, comprising:
a microphone array configured to collect an audio signal, the microphone array comprising at least two annular structures;
a processor connected to the microphone array, the processor being configured to process the audio signal;
a memory storing a computer program; and
a housing encapsulating the microphone array and the processor,
the computer program, when executed by the processor, causing the processor to perform the speech recognition method according to any one of claims 1 to 8.

12. The electronic device according to claim 11, wherein at least three microphones are uniformly provided on each annular structure.

13. The electronic device according to claim 11, wherein the annular structures are located at concentric circles.

14. The electronic device according to claim 13, wherein microphones on two adjacent annular structures are disposed in the same directions.

15. The electronic device according to claim 13, wherein an angle exists between microphones on any two annular structures.
